# EUROPEAN PATENT SPECIFICATION

(11) **EP 1 422 943 B1**
(45) Date of publication and mention of the grant of the patent: **17.01.2007**
(21) Application number: 03019196.9
(22) Date of filing: 25.08.2003
(51) Int. Cl.: H04N 7/167

(54) **Transmitter apparatus, reciever apparatus and recieving method**
Sendevorrichtung, Empfängervorrichtung und Empfangsverfahren
Dispositif émetteur, dispositif récepteur et procédé de réception

(30) Priority: 25.11.2002 JP 2002340968
(43) Date of publication of application: 26.05.2004
(73) Proprietor: KABUSHIKI KAISHA TOSHIBA, Tokyo (JP)
(72) Inventor: Kato, Hirotsugu, c/o Toshiba Corp., Int. Prop. Div, Tokyo 105-8001 (JP); Yasuki, Seijiro, c/o Toshiba Corp., Int. Prop. Div, Tokyo 105-8001 (JP)
(74) Representative: Henkel, Feiler & Hänzel

(56) References cited:
- US-A- 5 794 115
- US-A1- 2001 012 365
- US-A1- 2002 059 579

## Description

This invention relates to the improvement of a transmitter apparatus which can transmit data contents by use of TV broadcasting and a network such as Internet, for example. Further, this invention relates to the improvement of a receiver apparatus and receiving method which receive data contents transmitted from the transmitter apparatus.

As is well known in the art, recently, distribution systems which provide contents acquired from various types of information supplying media to a large number of users are developed. As the contents distribution system, for example, moving picture contents distribution service or the like is put into practice.

The moving picture contents distribution service is to permit moving picture contents to be distributed from a server to a television (TV) receiver and observed (viewed and listened) by connecting the TV receiver to Internet and requesting a call of the moving picture contents from the TV receiver to a preset server on Internet.

In the moving picture contents distribution service described above, the data size of the moving picture contents which flow through a communication line becomes extremely large. Therefore, in order to provide the moving picture contents distribution service of a sufficiently practical level to the user, it becomes necessary to enhance the operation speed of the network (make the network into a broadband form).

For example, when the moving picture contents are subjected to a compression process by use of an MPEG (Moving Picture Experts Group) 2 system, the transmission rate thereof may become 4 Mbps (Mega bit per second) for standard TV picture quality based on the NTSC (National Television System Committee) system and 30 Mbps for Hi-vision picture quality in some cases.

When Internet communication is performed by use of an analog modem via an analog telephone line in general households, the transmission rate thereof becomes approximately 56 Kbps (Kilo bit per second) at most.

In this situation, for example, when the moving picture contents of one hour for the standard TV picture quality based on the NTSC system are downloaded from the server to the TV receiver, the total data size of the moving picture contents of one hour becomes 4 Mbps × one hour × 60 minutes × 60 seconds = 14400 Mbits = 14745600 Kbits.

Therefore, time required for downloading the data is 14745600 Kbits/56 Kbits = 263314 seconds = 73 hours, that is, three days. Thus, it is practically impossible to download the moving picture contents from the server and observe the moving picture contents according to the request of the user.

Recently, as the broadband communication service using the analog telephone line, an ADSL (Asymmetric Digital Subscriber Line) has been popularized. In Internet connection by use of the ADSL, a transmission rate of 1.5 Mbps to 12 Mbps can be attained.

Therefore, in the case of an 8 Mbps type ADSL, there is a possibility that the communication performance capable of playing back the moving picture contents of 4 Mbps which have the standard TV picture quality based on the NTSC system can be attained. However, in the case of the moving picture contents of Hi-vision picture quality which require a transmission rate of approximately 30 Mbps, it becomes necessary to use a transmission rate which is three times to four times the conventional case.

Since a transmission rate of 100 Mbps can be attained in optical fiber communication means using an FTTH (Fiber To The Home), the moving picture contents of Hi-vision picture quality having a transmission rate of approximately 30 Mbps can be stably played back. However, since conservation of the communication infrastructure is required to popularize the FTTH, it is considered that Internet connection using an analog telephone line such as ADSL will become dominant in general households for the time being.

Therefore, providers of moving picture contents distribution services are required to provide practical services for a large number of general households which make connections to Internet by use of the analog telephone line in order to widely collect as many users as possible. Thus, they prepare moving picture contents of low picture quality corresponding to a low transmission rate.

However, the transmission rate of the communication network is referred to as best effort and is not ensured and the transmission rate is extremely lowered at the time of congestion of the network even in the case of 8 Mbps type ADSL, for example. In this case, in a TV receiver, the playback picture will be destroyed due to a reception error of the moving picture contents.

Therefore, the provider makes an attempt so as to permit the moving picture contents to be stably received on the TV receiver side. In order to serve the above purpose, the provider is required to reduce the data size of the moving picture contents as small as possible and perform services having margins with respect to the transmission rates of the communication network by previously taking it into consideration that the transmission rate of the communication network will be lowered. As a result, the picture quality of the moving picture contents which can be provided will become low.

Thus, if the operation speeds of the Internet connection environment in the general households are not sufficiently enhanced, sufficiently high transmission rates to distribute moving picture contents with high picture quality cannot be attained and strict restrictions are placed on the operation of performing the moving picture contents distribution service.

In Jpn. Pat. Appln. KOKAI Publication No. 2002-64806, the technique for correctly displaying contents distributed on TV broadcasting on the receiver when password data obtained via Internet by use of an address attached to a TV broadcasting signal is set to correspond to password data attached to the TV broadcasting signal is disclosed.

Further, in Jpn. Pat. Appln. KOKAI Publication No. 2002-55909, the technique for permitting the user to select an Internet address and access a desired site since an access device reads out the Internet address from a remote controller and displays the same when the receiver device extracts the Internet address from the received contents and stores the same into the remote controller is disclosed.

However, in either of the above Patent Publication Documents, the technique for permitting the distribution service of moving picture contents with the extremely large data size to be performed at a transmission rate which becomes sufficiently practical with respect to the user as described above is not described at all.

As described above, in the present moving picture contents distribution system, it is necessary to provide a high speed communication line on the user side in order to distribute large-capacity moving picture contents of Hi-vision, for example.

However, since the analog telephone line is dominantly used in the network connection environment in the present general households, the transmission rate which is sufficiently high to download the moving picture contents cannot be attained. Particularly, it is difficult to download and play back the moving picture contents of high picture quality at the Hi-vision level.

Therefore, the provider has a problem that low-rate moving picture contents must be distributed so that he can provide the distribution service with respect to the user having a low-rate communication line.

US 5 794 115 discloses a system for the so-called "pay-per-program" for viewing individual program on pay basis without signing a comprehensive contract. In response to a request for viewing a pay program executed via public telephone line from an applicant for viewing, a charging center sends a viewing permit code for viewing a pay program to a data communication device and collects a fee for the pay program. Upon receipt of the viewing permit code, a receiving device offers the pay program according to the viewing permit code. The broadcasting program is scrambled by three modes of fixed, selective and change. The request for viewing is executed in three modes by specifying time, program number and temporary number.. As the viewing permit code, one of three modes is adopted: decode data, non-opened program number or decode data number.

US 2002/0059579 discloses a television distributing system in which in the case when password data added to a TV broadcasting signal and password data transmitted from an Internet connection section have a predetermined correlation with each other, a display section is allowed to display the corresponding contents normally. Therefore, accounting processes are imposed on the transmission of the password data so that a normal displaying operation is charged in an indirect manner for each of the contents.

US 2001/0012365 discloses a system for encryption and copy protection of digital video or audio data using several different VLC code tables or several different sets of VLC code tables in the encoder and decoder. At regular or irregular time instants a different VLC code table or set of VLC code tables is selected synchronously in the encoder and decoder. The information about the selected VLC code table or set of VLC code tables is transmitted using encryption. A corresponding set of VLC code tables can be stored in the decoder. As an alternative or in addition, an updated and possibly encrypted VLC code table or set of VLC code tables can be transmitted from the encoder to the decoder, whereby the information about the selected VLC code table or set of VLC code tables can be transmitted in a non-encrypted format.

Therefore, this invention has been made to solve the above problem and an object of this invention is to provide a transmitter apparatus, receiver apparatus and receiving method which can stably distribute large-capacity data contents at the practical level irrespective of the network connection environment of the user.

According to the present invention the above object is achieved by a method according to claim 1, a receiver apparatus according to claim 5 and by a transmitter apparatus as specified in claim 9. The dependent claims are directed to different advantageous aspects of the invention.

The invention can be more fully understood from the following detailed description when taken in conjunction with the accompanying drawings, in which:
FIG. 1 is a diagram schematically showing a moving picture contents distribution system, for illustrating an embodiment of this invention,
FIG. 2 is a diagram for illustrating a method for encrypting moving picture contents in the above embodiment,
FIG. 3 is a block configuration diagram for specifically illustrating a server and television receiver in the above embodiment,
FIG. 4 is a diagram for illustrating a case wherein time stamps and encryption keys are set to correspond to each other and recorded in a memory of the server in the above embodiment,
FIG. 5 is a view for illustrating operation screens when the user observes desired moving picture contents in the above embodiment,
FIG. 6 is a diagram for illustrating an operation when the playback operation and temporary stopping operation are requested in the above embodiment,
FIG. 7 is a diagram for illustrating an operation when a fast-forwarding playback operation is requested in the above embodiment,
FIG. 8 is a diagram for illustrating an operation when a slow playback operation is requested in the above embodiment, and
FIG. 9 is a flowchart explaining the operation of a system according to an embodiment of the present invention.

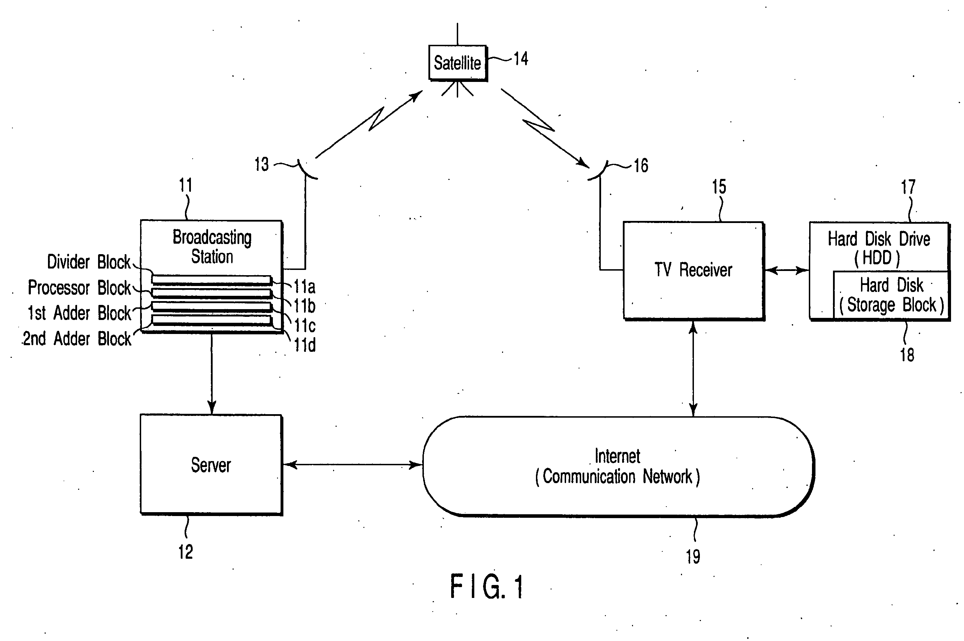

There will now be described an embodiment of this invention in detail with reference to the accompanying drawings. FIG. 1 schematically shows a moving picture contents distribution system which will be explained in the present embodiment. In FIG. 1, a symbol 11 denotes a broadcasting station. The broadcasting station 11 broadcasts moving picture contents in a digital form.

In this case, the broadcasting station 11 subjects the broadcasted moving picture contents to an encrypting process, accesses a specified server 12 and attaches link information used to read out information to the moving picture contents, and transmits the resultant information from an antenna 13. Further, the broadcasting station 11 supplies and holds an encryption key used to encrypt the moving picture contents to and in the server 12 specified by the link information.

Station 11 may include divider block 11a, processor block 11b, first adder block 11c, and second adder block 11d. Divider block 11a may be configured to divide given contents into data units having a prescribed amount of data. Processor block 11b may be configured to execute encryption processing against each of the divided data units using different encryption keys. First adder block 11c may be configured to add time information to each of the encrypted data units, wherein the time information indicates given reproduction timing. Second adder block 11d may be configured to add the link information to encrypted contents obtained by sequentially continuing the encrypted data units, wherein each of the encrypted data units may have the time information.

Server 12 may comprise transmitter 24 including first transmission part 24a and second transmission part 24b. First transmission part 24a may be configured to transmit, to communication network 19, other time information for specifying the data unit of the encrypted contents being transmitted by station 11. Second transmission part 24b may be configured to transmit to communication network 19 the encryption key, wherein the encryption key serves to decrypt the data unit corresponding to the other time information.

In this case, a signal transmitted from the antenna 13 of the broadcasting station 11 is received by an antenna 16 of a TV receiver 15 of the user via a satellite 14. The TV receiver 15 takes out moving picture contents from the signal received by the antenna 16, supplies the moving picture contents in an encrypted state to an HDD (hard Disk Drive) 17 and stores the same in a hard disk 18.

Further, the TV receiver 15 takes out link information from the signal received by the antenna 16 and accesses the server 12 via Internet 19 to acquire an encryption key from the server 12.

Therefore, in the TV receiver 15, the encrypted moving picture contents are read out from the hard disk 18 and encryption of the moving picture contents is decoded (broken) based on the encryption key acquired from the server 12. As a result, it becomes possible to observe the moving picture contents.

According to the above embodiment, the moving picture contents which are large-capacity data contents are encrypted and transmitted to the TV receiver 15 on the broadcasting radio waves and stored on the hard disk 18. Further, in Internet 19, an encryption key used to decode (break) encryption of the moving picture contents is transmitted.

Thus, it becomes unnecessary to distribute the large-capacity moving picture contents on Internet 19. Therefore, it becomes possible to stably distribute the large-capacity moving picture contents at the practical level with respect to general users who make connections to Internet 19 by use of the analog telephone line. Therefore, it becomes possible to observe the moving picture contents.

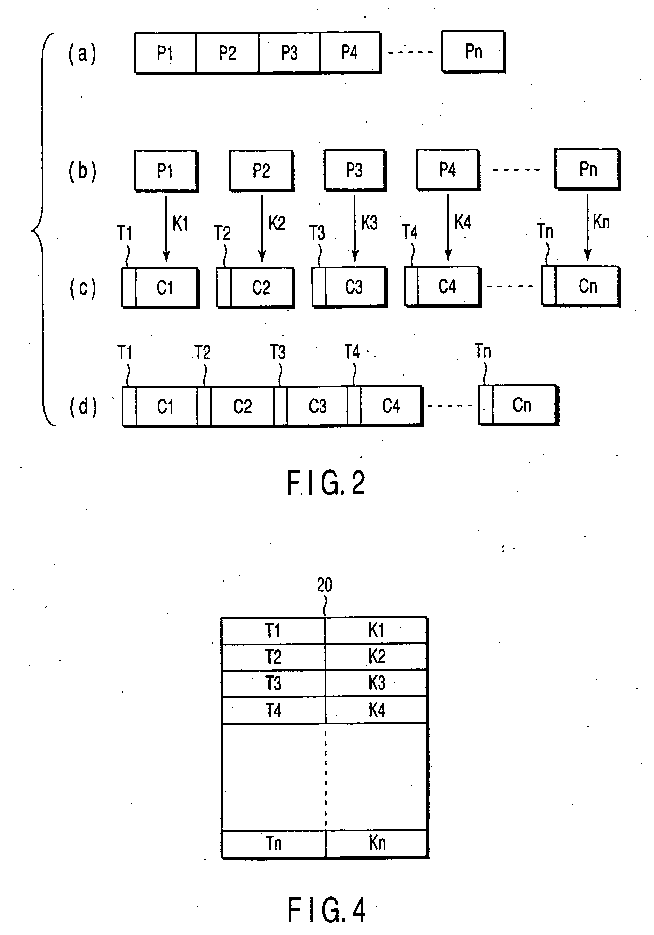

FIGS. 2(a) to 2(d) illustrate a method for encrypting moving picture contents. That is, as shown in FIG. 2(a), a series of successive moving picture contents is divided into a plurality of moving picture packets P1, P2, P3, P4, ···, Pn as shown in FIG. 2 (b).

Then, as shown in FIG. 2(c), the moving picture packets P1, P2, P3, P4, ···, Pn which are thus divided are subjected to an encrypting process by use of different encryption keys K1, K2, K3, K4, ···, Kn.

Further, time stamps T1, T2, T3, T4, ···, Tn which are time information to specify playback timings are respectively attached to the thus encrypted moving picture packets C1, C2, C3, C4, ···, Cn.

After this, as shown in FIG. 2(d), the encrypted moving picture packets C1, C2, C3, C4, ···, Cn with the time stamps T1, T2, T3, T4, ···, Tn attached thereto are reconfigured into a series of successive encrypted moving picture contents. Thus, the moving picture contents encrypting process is completed.

In this case, in the broadcasting station 11, link information used to access the server 12 is attached to the encrypted moving picture contents configured as shown in FIG. 2(d) and transmitted from the antenna 13.

In the broadcasting station 11, the encryption keys K1, K2, K3, K4, ···, Kn used for the encrypting process of the moving picture contents and the time stamps T1, T2, T3, T4, ···, Tn are set to correspond to each other and supplied to and held in the server 12.

The link information and encrypted moving picture contents transmitted from the broadcasting station 11 via the antenna 13 are received by the TV receiver 15 and stored on the hard disk 18.

In this case, if the user performs an operation of requesting that preset encrypted moving picture contents stored on the hard disk 18 be observed with respect to the TV receiver 15, the TV receiver 15 reads out link information corresponding to the encrypted moving picture contents which are required to be observed from the hard disk 18.

Then, the TV receiver 15 creates a command which requires the encryption keys K1, K2, K3, K4, ···, Kn which are used to decrypt the encrypted moving picture contents based on the readout link information and transmits the same as uplink data to Internet 19.

An IP (Internet Protocol) address to specify the server 12 which holds the necessary encryption keys K1, K2, K3, K4, ···, Kn is attached to the uplink data.

Therefore, when receiving an encryption requesting command contained in the uplink data, the server 12 corresponding to the IP address transmits data for decryption containing the time stamps T1, T2, T3, T4, ···, Tn and the encryption keys K1, K2, K3, K4, ···, Kn held therein to Internet 19.

In this case, the server 12 sequentially transmits pairs of the encryption keys Ki and time stamps Ti such as a pair of the encryption key K1 and time stamp T1, a pair of the encryption key K2 and time stamp T2, a pair of.the encryption key K3 and time stamp T3, ··· to Internet 19 at preset timings.

Thus, the TV receiver 15 first acquires the pair of the encryption key K1 and time stamp T1 and reads out an encrypted moving picture packet T1+C1 which coincides with the time stamp T1 from the encrypted moving picture contents stored on the hard disk 18.

After this, the TV receiver 15 subjects the encrypted moving picture packet C1 to the decrypting process by use of the encryption key K1 which makes the pair together with the time stamp T1. Then, it removes the time stamp T1 and acquires a moving picture packet P1.

Next, the TV receiver 15 acquires the pair of the encryption key K2 and time stamp T2 and reads out an encrypted moving picture packet T2+C2 which coincides with the time stamp T2 from the encrypted moving picture contents stored on the hard disk 18.

After this, the TV receiver 15 subjects the encrypted moving picture packet C2 to the decrypting process by use of the encryption key K2 which makes the pair together with the time stamp T2. Then, it removes the time stamp T2 and acquires a moving picture packet P2. After this, the same operation is repeatedly performed until a moving picture packet Pn is obtained.

That is, the TV receiver 15 reads out an encrypted moving picture packet Ti+Ci which coincides with the time stamp Ti from the encrypted moving picture contents stored on the hard disk 18 according to the pair of the time stamp Ti and the encryption key Ki (1 ≤ i ≤ n) acquired as data for decryption.

After this, the TV receiver 15 subjects the encrypted moving picture packet Ci to the decrypting process by use of the encryption keyKi which makes the pair together with the time stamp Ti. Then, it removes the time stamp Ti and acquires a moving picture packet Pi.

Next, the TV receiver 15 configures a series of successive moving picture contents as shown in FIG. 2(a) based on the thus acquired moving picture packets P1, P2, P3, P4, ···, Pn. The moving picture contents can be demodulated and displayed as a video image.

As described above, a series of successive moving picture contents is divided into a plurality of moving picture packets P1, P2, P3, P4, ···, Pn and the secrecy of the moving picture contents can be further enhanced by subjecting the respective moving picture packets P1, P2, P3, P4, ···, Pn to the encrypting process by use of the different encryption keys K1, K2, K3, K4, ···, Kn.

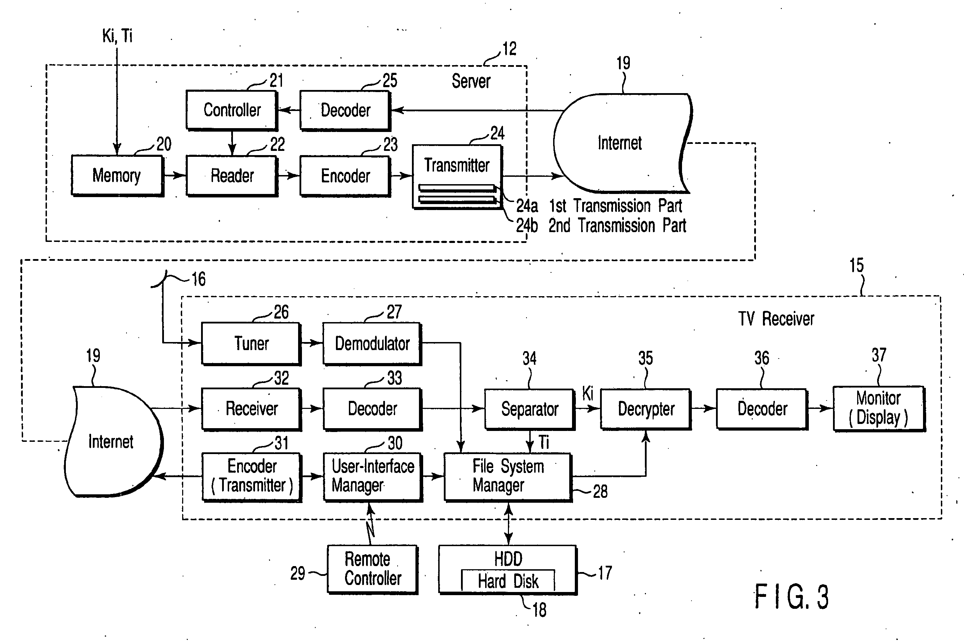

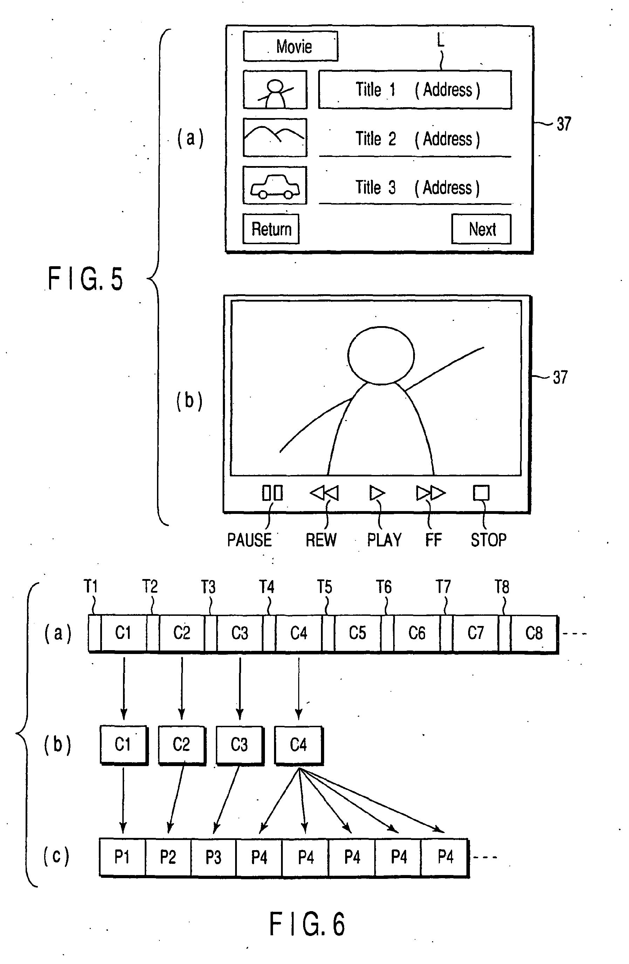

FIG. 3 shows the server 12 and TV receiver 15 in detail. That is, the server 12 records encryption keys Ki and time stamps Ti transmitted from the broadcasting station 11 in a memory 20. In this case, as shown in FIG. 4, the encryption keys K1, K2, K3, K4, ···, Kn and the time stamps T1, T2, T3, T4, ···, Tn which are set in the correspondence relation are recorded in the memory 20.

The encryption keys Ki and time stamps Ti recorded in the memory 20 are selectively read out by a reader 22 controlled according to an instruction of a controller 21. The readout encryption key Ki and time stamp Ti are converted into a form which is suitable to be output to Internet 19 by an encoder 23 and are transmitted to Internet 19 via a transmitter 24 as the decrypted data.

Further, the server 12 receives uplink data transmitted to Internet 19 from the TV receiver 15, decodes the data by use of a decoder 25 and then analyzes the data by use of the controller 21 to control the reader 22.

In the TV receiver 15, a signal received by the antenna 16 is supplied to a tuner 26 and preset encrypted moving picture contents and link information attached thereto are extracted from the signal.

The encrypted moving picture contents and link information extracted by the tuner 26 are subjected to a demodulation process by a demodulator 27, transmitted to the HDD 17 via a file system manager 28 and recorded on the hard disk 18.

The user can make a request to the TV receiver 15 by operating a remote controller 29 so as to permit the encrypted moving picture contents recorded on the hard disk 18 to be observed. In this case, in the remote controller 29, a time stamp is specified and a request for playback of the encrypted moving picture contents is made.

A user-interface (UI) manager 30 which has received operation information of the remote controller 29 reads out link information attached to the encrypted moving picture contents which are requested for observation from the hard disk 18 via the file system manager 28.

The UI manager 30 creates uplink data containing a command which requests an encryption key corresponding to the time stamp specified by the remote controller 29 based on the link information. The uplink data is converted into a form which is suitable to be output to Internet 19 by an encoder 31 and transmitted to Internet 19.

Then, the server 12 receives an encryption key request command with the time stamp attached thereto from the uplink data transmitted to Internet 19, decodes the command by the decoder 25 and supplies the result of decoding to the controller 21.

The controller 21 controls the reader 22 based on the input time stamp and causes the specified time stamp Ti and the encryption key Ki corresponding thereto to be read out from the memory 20. The time stamp Ti and encryption key Ki read out by use of the reader 22 are transmitted to Internet 19 via the encoder 23 and transmitter 24 as data for decryption as described before.

Then, in the TV receiver 15, the data for decryption transmitted to Internet 19 is received by a receiver 32, decoded by a decoder 33 and then separated into a time stamp Ti and encryption key Ki by a separator 34. The time stamp Ti is supplied to the file system manager 28 and the encryption key Ki is supplied to a decrypter 35.

In this case, the file system manager 28 reads out an encrypted moving picture packet Ti+Ci corresponding to the input time stamp Ti from the hard disk 18 and supplies the same to the decrypter 35. Then, the decrypter 35 subjects the input encrypted moving picture packet Ci to the decrypting process by use of the encryption key Ki supplied from the separator 34 to generate a moving picture packet Pi.

. After this, the moving picture packet Pi generated from the decrypter 35 is supplied to a decoder 36, decoded and configured into a series of successive moving picture contents and displayed as a video image on a monitor 37.

Next, a method for permitting the user to make a request for observation of desired encrypted moving picture contents among a plurality of encrypted moving picture contents recorded on the hard disk 18 by use of the remote controller 29 is explained.

First, when the user operates the playback request key of the remote controller 29, the file system manager 28 displays a plurality of encrypted moving picture contents recorded on the hard disk 18 on the monitor 37 for respective genres.

For example, when the user selects the genre of movies on the screen of the monitor 37, thumbnail pictures and titles of contents corresponding to the movie and addresses which are link information items thereof among a plurality of encrypted moving picture contents recorded on the hard disk 18 are displayed on the monitor 37 in a list form as shown in FIG. 5(a).

When the contents corresponding to the movie cannot be displayed on one screen, operation areas such as "Return" and "Next" are displayed on the monitor 37 and the contents can be displayed over a plurality of screens which are selectively switched.

On the list-form display screen, one title is surrounded by a frame line L. The frame line L is vertically moved to surround any one of the titles by operating an up/down key or the like of the remote controller 29. Then, the user.sets the frame line L to surround the desired title and operates an enter key of the remote controller 29, and then, the operation screen corresponding to the movie of the title is displayed on the monitor 37 as shown in FIG. 5(b).

On the operation screen, the playback operation "PLAY", fast forwarding operation "FF", fast reversing operation "REW", temporary stopping operation "PAUSE" and stopping operation "STOP" can be performed. A desired one of the above operations can be selected by operating a right/left key of the remote controller 29 and realized by operating the enter key.

For example, when the playback button "PLAY" is operated, the UI manager 30 of the TV receiver 15 transmits uplink data which sequentially specifies all of the encrypted moving picture packets Ti+Ci configuring the selected encrypted moving picture contents to Internet 19 as described before.

In order to serve the above purpose, the controller 21 of the server 12 sequentially transmits the time stamp Ti and encryption key Ki specified by the uplink data to Internet 19 as data for decryption.

As a result, in the TV receiver 15, encrypted moving picture packets Ci are sequentially read out from the hard disk 18 and decrypted based on the data for decryption. Thus, the contents which the user selects from a plurality of encrypted moving picture contents recorded on the hard disk 18 can be played back.

Specifically, FIG. 6(a) shows the contents Ti+Ci which the user selects for observation from the plurality of encrypted moving picture contents recorded on the hard disk 18 by operating the remote controller 29.

In the TV receiver 15, the encrypted moving picture packets C1, C2, C3, ··· corresponding to the time stamps T1, T2, T3, ··· are sequentially read out from the hard disk 18 based on the time stamp Ti contained in the data for decryption transmitted from the server 12 as shown in FIG. 6(b). Then, they are decrypted based on the encryption keys K1, K2, K3, ···,

Next, in the TV receiver 15, moving picture packets P1, P2, P3, ··· after decryption are made continuous to configure moving picture contents as shown in FIG. 6(c). Thus, the moving picture contents can be played back.

During the above playback operation, for example, if the temporary stopping button "PAUSE" is operated at the playback time of the moving picture packet P4, uplink data which specifies the stamp T4 corresponding to the moving picture packet P4 is transmitted to Internet 19.

The server 12 which has received the uplink data continues to output the time stamp T4 corresponding to the moving picture packet P4 and the encryption key K4 contained in the data for decryption until the operation of the temporary stopping button "PAUSE" is released.

Therefore, in the TV receiver 15, only the encrypted moving picture packet C4 corresponding to the time stamp T4 is read out from the hard disk 18. After this, the encrypted moving picture packet C4 is decrypted by use of the encryption key K4 to be used as the moving picture packet P4 and successively played back as shown in FIG. 6(c). Thus, the temporary stopping operation is performed.

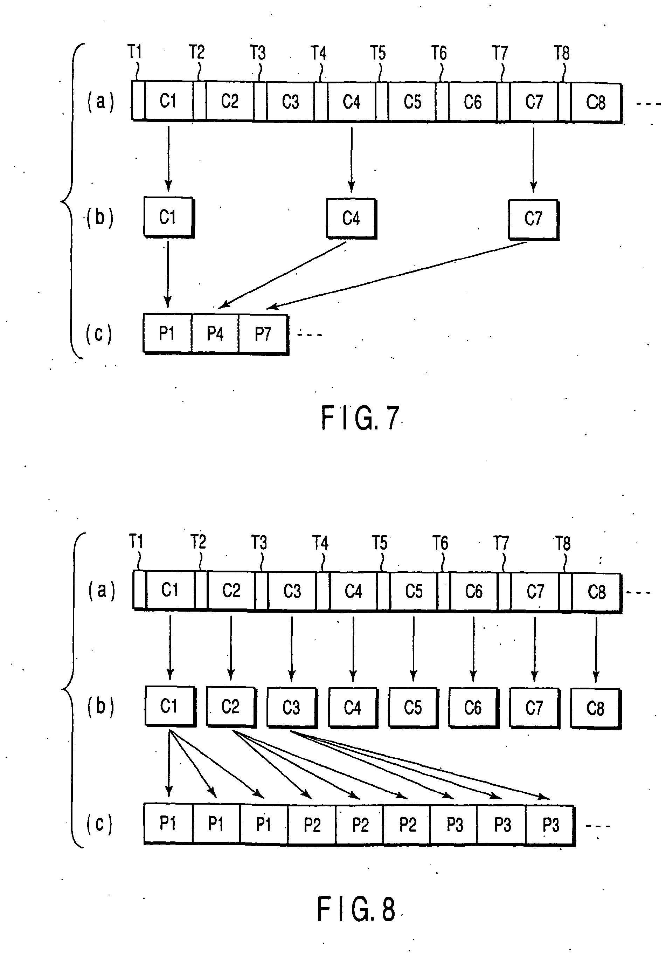

. Further, when the playback button "PLAY" and fast forwarding button "FF" are operated to request a fast-forwarding playback operation (special playback operation), the TV receiver 15 transmits uplink data which intermittently specifies time stamps T1, T4, T7, ··· from the encrypted moving picture contents recorded on the hard disk 18 as shown in FIG. 7(a) to Internet 19.

As a result, the server 12 transmits data for decryption which contains the time stamps T1, T4, T7, ··· and encryption keys K1, K4, K7, ··· thereof. Further, the TV receiver 15 intermittently reads out encrypted moving picture packets C1, C4, C7, ··· from the hard disk 18 based on the received data for decryption as shown in FIG. 7(b) and decrypts the readout packets by use of the encryption keys K1, K4, K7, ···.

Then, the TV receiver 15 successively plays back the decrypted moving picture packets P1, P4, P7, ··· as shown in FIG. 7(c). Thus, the fast-forwarding playback operation can be performed.

Also, when the playback button "PLAY" and fast reversing button "REW" are both operated to request a fast-reversing playback operation (special playback operation), the fast-reversing playback operation can be easily performed by intermittently specifying the time stamps Ti towards the time-preceding positions.

Further, when a slow playback operation (special playback operation) is requested, the TV receiver 15 transmits uplink data which sequentially specifies the time stamps T1, T2, T3, ··· from the encrypted moving picture contents recorded on the hard disk 18 to Internet 19 as shown in FIG. 8(a).

Thus, the server 12 transmits data for decryption which contains the time stamps T1, T2, T3, ··· and encryption keys K1, K2, K3, ··· thereof. Further, the TV receiver 15 reads out encrypted moving picture packets C1, C2, C3, ··· from the hard disk 18 based on the received data for decryption as shown in FIG. 8(b) and decrypts the readout packets by use of the encryption keys K1, K2, K3, ···.

Then, the TV receiver 15 plays back the decrypted moving picture packets P1, P2, P3, ··· by a preset number of times as shown in FIG. 8(c). Thus, the slow playback operation can be performed.

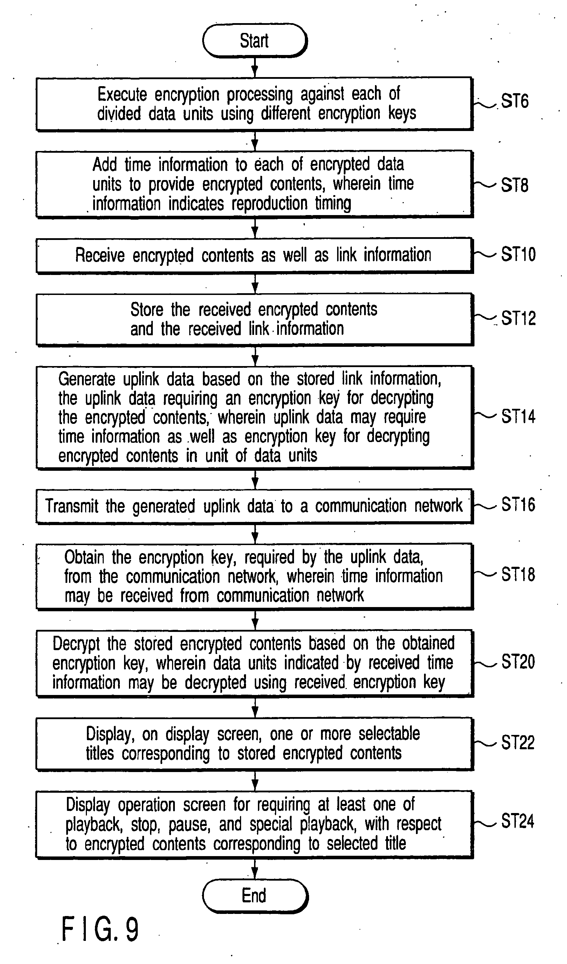

FIG. 9 is a flowchart explaining the operation of a system according to an embodiment of the present invention.

First, encryption processing against each of divided data units is executed using different encryption keys (ST06). Then, given time information is added to each of encrypted data units to provide encrypted contents (ST08), wherein the time information indicates given reproduction timing. Then, encrypted contents as well as link information are received (ST10). Then, the received encrypted contents and the received link information are stored (ST12).

Thereafter, given uplink data is generated based on the stored link information (ST14), wherein the uplink data requires an encryption key for decrypting the encrypted contents. Here, the uplink data may require the time information as well as the encryption key for decrypting encrypted contents in unit of data units. Then, the generated uplink data is transmitted to a communication network (ST16). Then, the encryption key, required by the uplink data, is obtained from communication network (INTERNET) 19, wherein the time information may also be received from communication network 19.

Then, the stored encrypted contents are decrypted based on the obtained encryption key (ST20). Here, the data units indicated by the received time information may be decrypted using the received encryption key. Thereafter, one or more selectable titles corresponding to stored encrypted contents are displayed on a display screen (ST22). At this time, an operation screen for requiring at least one of a playback, stop, pause, and special playback, may be displayed with respect to the encrypted contents corresponding to the selected title (ST24)

In the above embodiment, information which specifies the time stamp Ti is contained in uplink data transmitted to Internet 19 from the TV receiver 15 and the server 12 transmits the time stamp Ti specified by the uplink data and the encryption key Ki thereof.

However, this is not limitative and, for example, by specifying only the playback function or fast-forwarding playback function by use of uplink data, the server 12 may automatically select a necessary time stamp Ti based on the requested function and transmit the same together with the encryption key Ki. Thus, it becomes possible to easily manage the playback operation and other special playback operations in the TV receiver 15 on the server 12 side, that is, on the contents provider side.

Further, in the above embodiment, the encrypted moving picture contents broadcasted via the satellite 14 are previously received by the TV receiver 15 and stored on the hard disk 18. However, as the encrypted moving picture contents stored on the hard disk 18, data which is previously transmitted with much time by use of a communication network can be used, for example.

In the above embodiment, the encryption key Ki is transmitted from the broadcasting station 11 to the server 12 and held therein. However, it is also possible to transmit the encryption key Ki from the server 12 to the broadcasting station 11 and subject the moving picture packet Pi to be broadcasted to the encrypting process by using the encryption key Ki given from the server 12 in the broadcasting station 11.

The broadcasting station 11 and server 12 can be managed by different business companies or by the same business company. In short, the configuration may be so formed that the encryption key Ki can be transmitted between the broadcasting station 11 and the server 12 with high security.

With the above configuration and method, large-capacity data contents are encrypted, transmitted together with link information and stored on the receiver side. Further, the encryption key used to decode (or break) encryption is transmitted in the communication network. As a result, since it becomes unnecessary to distribute large-capacity contents by use of the communication network, the large-capacity contents can be stably distributed at the practical level irrespective of the network connection environment of the user. Therefore, it becomes possible to observe the large-capacity contents.

The presently disclosed embodiments are to be considered in all respects as illustrative and not restrictive, the scope of the invention being indicated by the appended claims, rather than the foregoing description, and all changes that come within the meaning and range of equivalency of the claims are therefore intended to be embraced therein.

As described above, according to the present invention, a transmitter apparatus, receiver apparatus and receiving method which can stably distribute large-capacity data contents at the practical level irrespective of the network connection environment of the user can be provided.

## Claims

1. A data processing method comprising:
preparing moving picture contents in a digital form;
dividing the moving picture contents in data units (C1 - Cn);
encrypting the data units (ST6) using different encryption keys (K1 - Kn) ;
adding time information (T1 - Tn) indicating reproduction timing (ST8) to each of the encrypted divided data units (C1 - Cn) to provide encrypted contents,
broadcasting said encrypted contents;
receiving (ST10) said encrypted contents as well as link information serving to access a server (12) on an internet (19);
storing (ST12) the received encrypted contents and the received link information;
generating (ST14) uplink data having an Internet Protocol Address for specifying the server (12) based on the stored link information, said uplink data requiring the time information (T1 - Tn) and an encryption key for decrypting the encrypted contents;
transmitting (ST16) the generated uplink data to a communication network (19) of the internet (19);
obtaining (ST18) the encryption key, required by said uplink data, from the communication network (19); and
decrypting (ST20) the stored encrypted contents based on the obtained encryption key.

2. The method of claim 1, wherein
in the obtaining step (ST18) time information required by said uplink data is obtained from said communication network (19); and
in the decrypting step (ST20) the data units of the stored encrypted contents indicated by the obtained time information are decrypted using the obtained encryption key.

3. The method of claim 1, further comprising:
displaying (ST22) on a display screen one or more titles corresponding to the stored encrypted contents, said titles displayed on the display screen being configured to be selectable.

4. The method of claim 11, further comprising:
displaying (ST24) an operation screen for requiring at least one of a playback, stop, pause, and special playback, with respect to the encrypted contents corresponding to the title being selected.

5. A receiver apparatus adapted to be used in the method of any one of claims 1 to 4, wherein the apparatus is configured to be connected to an internet (19) and configured to store said encrypted contents, said apparatus comprising:
receiver unit (26) configured to receive said encrypted contents as well as link information serving to access a server (12) on the internet (19);
a recorder unit (17, 18) configured to store said received encrypted contents as well as the received link information;
a generator unit (30) configured to generate uplink data having an Internet Protocol Address for specifying the server (12) based on the stored link information, said uplink data requiring the time information (T1 - Tn) and requiring an encryption: key (K1 - Kn) for decrypting the encrypted contents;
a transmission unit (31) configured to transmit the generated uplink data to a communication network of the internet (19) ;
a unit (32) configured to obtain the encryption key (K1 - Kn) required by said uplink data from said communication network (19) and
a decryption unit (35) configured to decrypt the encrypted contents stored in the recorder unit using the obtained encryption key .

6. The apparatus of claim 5, wherein:
said receiver unit is a TV tuner unit (26); and
further comprising a display unit (37) configured to display an image of the decrypted contents from said decryption unit (35)

7. The apparatus of claim 5 or 6, further comprising:
an operation part (19, 30) configured to display on a display screen one or more titles corresponding to the encrypted contents stored in the recorder unit, said titles displayed on the display screen being selectable.

8. The apparatus of claim 7, further comprising:
a display part configured to display an operation screen for requiring at least one of a playback, stop, pause, and special playback, with respect to the encrypted contents corresponding to the title selected by said operation part.

9. A transmitter apparatus adapted to be used in a method according to any one of claims 1 to 4, comprising
means adapted for preparing moving picture contents in a digital form;
means adapted for dividing the moving picture contents in data units (C1 - Cn);
means adapted for encrypting the data units (ST6) using different encryption keys (K1 - Kn);
means adapted for adding time information (T1 - Tn) indicating reproduction timing (ST8) to each of the encrypted divided data units (C1 - Cn) to provide encrypted contents,
means adapted for broadcasting said encrypted contents.

## Patentansprüche

1. Datenverarbeitungsverfahren, mit:
Erstellen von Bewegtbildinhalt in einer digitalen Form;
Aufteilen des Bewegtbildinhalts in Dateneinheiten (C1 - Cn);
Verschlüsseln der Dateneinheiten (ST6) mit unterschiedlichen Verschlüsselungsschlüsseln (K1 - Kn);
Hinzufügen von Zeitinformation (T1 - Tn), die das Wiedergabe-Timing (ST8) angibt, zu jeder der verschlüsselten aufgeteilten Dateneinheiten (C1 - Cn), um verschlüsselten Inhalt bereitzustellen,
Rundsenden des verschlüsselten Inhalts;
Empfangen (ST10) des verschlüsselten Inhalts sowie auch von Verbindungsinformation, die dazu dient, auf einen Server (12) auf einem Internet (19) zuzugreifen;
Speichern (ST12) des empfangenen verschlüsselten Inhalts und der empfangenen Verbindungsinformation;
Erzeugen (ST14) von Uplink-Daten, die eine Internet-Protokolladresse zum Spezifizieren des Servers (12) aufweisen, basierend auf der gespeicherten Verbindungsinformation, wobei die Uplink-Daten die Zeitinformation (T1 - Tn) und einen Verschlüsselungsschlüssel zum Entschlüsseln des verschlüsselten Inhalts verlangen;
Übertragen (ST16) der erzeugten Uplink-Daten zu einem Kommunikationsnetzwerk (19) des Internets (19);
Erhalten (ST18) des Verschlüsselungsschlüssels, der von den Uplink-Daten verlangt wird, von dem Kommunikationsnetzwerk (19); und
Entschlüsseln (ST20) des gespeicherten verschlüsselten Inhalts basierend auf dem erhaltenen Verschlüsselungsschlüssel.

2. Verfahren gemäß Anspruch 1, bei dem
bei dem Erhaltungsschritt (ST18) Zeitinformation, die von den Uplink-Daten verlangt wird, von dem Kommunikationsnetzwerk (19) erhalten wird; und
bei dem Entschlüsselungsschritt (ST20) die Dateneinheiten des gespeicherten verschlüsselten Inhalts, die durch die erhaltene Zeitinformation angegeben werden, mit dem erhaltenen Verschlüsselungsschlüssel entschlüsselt werden.

3. Verfahren gemäß Anspruch 1, ferner mit:
Anzeigen (ST22) auf einem Bildschirm einer oder mehrerer Titel, die dem gespeicherten verschlüsselten Inhalt entsprechen, wobei die auf dem Bildschirm angezeigten Titel konfiguriert sind, um auswählbar zu sein.

4. Verfahren gemäß Anspruch 1, ferner mit:
Anzeigen (ST24) eines Bedienungsschirms, um mindestens eines der folgenden mit Bezug auf den verschlüsselten Inhalt, der dem ausgewählten Titel entspricht, zu verlangen: eine Wiedergabe, einen Stopp, eine Pause und eine besondere Wiedergabe.

5. Empfängervorrichtung, die angepasst ist, bei dem Verfahren gemäß einem der Ansprüche 1 bis 4 verwendet zu werden, wobei die Vorrichtung konfiguriert ist, mit einem Internet (19) verbunden zu werden, und konfiguriert ist, um den verschlüsselten Inhalt zu speichern, wobei die Vorrichtung umfasst:
eine Empfangseinheit (26), die konfiguriert ist, um den verschlüsselten Inhalt sowie auch Verbindungsinformation zu empfangen, die dazu dient, auf einen Server (12) auf dem Internet (19) zuzugreifen;
eine Aufzeichnungseinheit (17, 18), die konfiguriert ist, um den empfangenen verschlüsselten Inhalt sowie auch die empfangene Verbindungsinformation zu speichern;
eine Generatoreinheit (30), die konfiguriert ist, um Uplink-Daten, die eine Internet-Protokolladresse zum Spezifizieren des Servers (12) aufweisen, basierend auf der gespeicherten Verbindungsinformation zu erzeugen, wobei die Uplink-Daten die Zeitinformation (T1 - Tn) und einen Verschlüsselungsschlüssel (K1 - Kn) zum Entschlüsseln des verschlüsselten Inhalts verlangen;
eine Übertragungseinheit (31), die konfiguriert ist, um die erzeugten Uplink-Daten zu einem Kommunikationsnetzwerk des Internets (19) zu übertragen;
eine Einheit (32), die konfiguriert ist, um den Verschlüsselungsschlüssel (K1 - Kn) zu erhalten, der von Uplink-Daten von dem Kommunikationsnetzwerk (19) verlangt wird; und
eine Entschlüsselungseinheit 835), die konfiguriert ist, um den in der Aufzeichnungseinheit gespeicherten verschlüsselten Inhalt mit dem erhaltenen Verschlüsselungsschlüssel zu entschlüsseln.

6. Vorrichtung gemäß Anspruch 5, bei der:
die Empfangseinheit eine Fernsehtunereinheit (26) ist; und
ferner mit einer Anzeigeeinheit (37), die konfiguriert ist, um ein Bild des verschlüsselten Inhalts von der Entschlüsselungseinheit (35) anzuzeigen.

7. Vorrichtung gemäß Anspruch 5 oder 6, ferner mit:
einem Bedienungsteil (19, 30), der konfiguriert ist, um auf einem Bildschirm einen oder mehrere Titel anzuzeigen, die dem in der Aufzeichnungseinheit gespeicherten verschlüsselten Inhalt entsprechen, wobei die auf dem Bildschirm angezeigten Titel auswählbar sind.

8. Vorrichtung gemäß Anspruch 7, ferner mit:
einem Anzeigeteil, der konfiguriert ist, um einen Bedienungsschirm anzuzeigen, um mindestens eines der folgenden mit Bezug auf den verschlüsselten Inhalt, der dem ausgewählten Titel entspricht, zu verlangen: eine Wiedergabe, einen Stopp, eine Pause und eine besondere Wiedergabe.

9. Sendevorrichtung, die angepasst ist, um bei einem Verfahren gemäß einem der Ansprüche 1 bis 4 verwendet zu werden, mit:
einem Mittel, das angepasst ist, um Bewegtbildinhalt in einer digitalen Form zu erstellen;
einem Mittel, das angepasst ist, um den Bewegtbildinhalt in Dateneinheiten (C1 - Cn) aufzuteilen;
einem Mittel, das angepasst ist, um die Dateneinheiten (ST6) mit unterschiedlichen Verschlüsselungsschlüsseln (K1 - Kn) zu verschlüsseln;
einem Mittel, das angepasst ist, um Zeitinformation (T1 - Tn), die das Wiedergabe-Timing (ST8) angibt, zu jedem der verschlüsselten aufgeteilten Dateneinheiten (C1 - Cn) hinzuzufügen, um verschlüsselten Inhalt bereitzustellen; und
einem Mittel, das zum Rundsenden des verschlüsselten Inhalts angepasst ist.

## Revendications

1. Procédé de traitement de données comprenant les étapes consistant à :
préparer un contenu d'image animée sous une forme numérique ;
diviser le contenu d'image animée en unités de données (C1 à Cn) ;
chiffrer les unités de données (ST6) en utilisant différentes clés de chiffrement (K1 à Kn) ;
ajouter des informations de temps (T1 à Tn) indiquant une synchronisation de reproduction (ST8) à chacune des unités de données (C1 à Cn) divisées chiffrées pour fournir un contenu chiffré ;
diffuser ledit contenu chiffré ;
recevoir (ST10) ledit contenu chiffré ainsi que des informations de lien servant à accéder à un serveur (12) sur Internet (19) ;
mémoriser (ST12) le contenu chiffré reçu et les informations de lien reçues ;
générer (ST14) des données de liaison montante ayant une adresse IP (Internet Protocol) pour spécifier le serveur (12) sur la base des informations de lien mémorisées, lesdites données de liaison montante nécessitant les informations de temps (T1 à Tn) et une clé de chiffrement pour déchiffrer le contenu chiffré ;
transmettre (ST16) les données de liaison montante générée à un réseau de communication (19) d'Internet (19) ;
obtenir (ST18) la clé de chiffrement, nécessaire auxdites données de liaison montante, du réseau de communication (19) ; et
déchiffrer (ST20) le contenu chiffré mémorisé sur la base de la clé de chiffrement obtenue.

2. Procédé selon la revendication 1, dans lequel :
à l'étape d'obtention (ST18), des informations de temps nécessaires auxdites données de liaison montante sont obtenues dudit réseau de communication (19) ; et
à l'étape de déchiffrement (ST20), les unités de données du contenu chiffré mémorisé indiquées par les informations de temps obtenues sont déchiffrées en utilisant la clé de chiffrement obtenue.

3. Procédé selon la revendication 1, comprenant en outre l'étape consistant à :
afficher (ST22) sur un écran d'affichage un ou plusieurs titres correspondant au contenu chiffré mémorisé, lesdits titres affichés sur l'écran d'affichage étant configurés pour pouvoir être sélectionnés.

4. Procédé selon la revendication 11, comprenant en outre l'étape consistant à :
afficher (ST24) un écran d'opérations pour demander au moins l'un d'une lecture, d'un arrêt, d'une pause et d'une lecture spéciale, en relation avec le contenu chiffré correspondant au titre sélectionné.

5. Dispositif de réception adapté pour être utilisé dans le procédé selon l'une quelconque des revendications 1 à 4, dans lequel le dispositif est configuré pour être connecté à Internet (19) et configuré pour mémoriser ledit contenu chiffré, ledit dispositif comprenant :
une unité de réception (26) configurée pour recevoir ledit contenu chiffré ainsi que des informations de lien servant à accéder à un serveur (12) sur Internet (19) ;
une unité d'enregistrement (17, 18) configurée pour mémoriser ledit contenu chiffré reçu ainsi que les informations de lien reçues ;
une unité de génération (30) configurée pour générer des données de liaison montante ayant une adresse IP (Internet Protocol) pour spécifier le serveur (12) sur la base des informations de lien mémorisées, lesdites données de liaison montante nécessitant les informations de temps (T1 à Tn) et nécessitant une clé de chiffrement (K1 à Kn) pour déchiffrer le contenu chiffré ;
une unité d'émission (31) configurée pour transmettre les données de liaison montante générée à un réseau de communication d'Internet (19) ;
une unité (32) configurée pour obtenir la clé de chiffrement (K1 à Kn) nécessaire auxdites données de liaison montante dudit réseau de communication (19) ; et
une unité de déchiffrement (35) configurée pour déchiffrer le contenu chiffré mémorisé dans l'unité d'enregistrement en utilisant la clé de chiffrement obtenue.

6. Dispositif selon la revendication 5, dans lequel :
ladite unité de réception est une unité de syntonisation de téléviseur (26) ; et
comprenant en outre une unité d'affichage (37) configurée pour afficher une image du contenu déchiffré provenant de ladite unité de déchiffrement (35).

7. Dispositif selon la revendication 5 ou 6, comprenant en outre :
une partie d'opérations (19, 30) configurée pour afficher sur un écran d'affichage un ou plusieurs titres correspondant au contenu chiffré mémorisé dans l'unité d'enregistrement, lesdits titres affichés sur l'écran d'affichage pouvant être sélectionnés.

8. Dispositif selon la revendication 7, comprenant en outre :
une partie d'affichage configurée pour afficher un écran d'opérations pour demander au moins l'un d'une lecture, d'un arrêt, d'une pause et d'une lecture spéciale, en relation avec le contenu chiffré correspondant au titre sélectionné par ladite partie d'opérations.

9. Dispositif d'émission adapté pour être utilisé dans un procédé selon l'une quelconque des revendications 1 à 4, comprenant :
des moyens adaptés pour préparer un contenu d'image animée sous une forme numérique ;
des moyens adaptés pour diviser le contenu d'image animée en unités de données (C1 à Cn) ;
des moyens adaptés pour chiffrer les unités de données (ST6) en utilisant différentes clés de chiffrement (K1 à Kn) ;
des moyens adaptés pour ajouter des informations de temps (T1 à Tn) indiquant une synchronisation de reproduction (ST8) à chacune des unités de données (C1 à Cn) divisées chiffrées pour fournir un contenu chiffré ;
des moyens adaptés pour diffuser ledit contenu chiffré.
